# EUROPEAN PATENT SPECIFICATION

(11) **EP 0 802 689 B1**
(45) Date of publication and mention of the grant of the patent: **03.07.2002**
(21) Application number: 97302553.9
(22) Date of filing: 15.04.1997
(51) Int. Cl.: H04N 9/83

(54) **Magnetic recording device**
Magnetische Aufnahmevorrichtung
Dispositif d'enregistrement magnétique

(30) Priority: 15.04.1996 JP 9257996
(43) Date of publication of application: 22.10.1997
(73) Proprietor: MITSUBISHI DENKI KABUSHIKI KAISHA, Tokyo 100 (JP)
(72) Inventor: Ueda, Takeshi, Chiyoda-ku, Tokyo 100 (JP)
(74) Representative: Burke, Steven David

(56) References cited:
- EP-A- 0 573 246

## Description

### BACKGROUND OF THE INVENTION

The present invention relates to a magnetic recording device, and a magnetic recording and reproducing device for performing long-time recording of video signals of the PAL system, by field extraction, and which enables production of images without extinction of color at the time of continuous reproduction from the recorded tape.

An example of a time-lapse VTR recording video signals one out of every three fields is disclose in Japanese Patent Kokai Publication No. 197,300/1994, (JP-A-6 197300). According to the technology disclosed in this publication, a gate means for field extraction and a tape transport control means are used to enable reproduction of the video signals having been field-extraction recorded. That is the disclosed method enables playback in a normal mode on a VTR of the VHS type.

According to the PAL system, the phase of one of the two chrominance signals is inverted every other horizontal period (one horizontal period will hereinafter be represented by "H"), and at the receiving end, it is combined with the signal having been delayed by one horizontal period. This provides an improvement with regard to color distortion. Description is now made of an example of a video signal reproduction processing circuit in a VTR coloring images by means of chroma signals, during reproduction of the video signals of the PAL system having been field-extraction recorded, to which the above-mentioned prior art is applied.

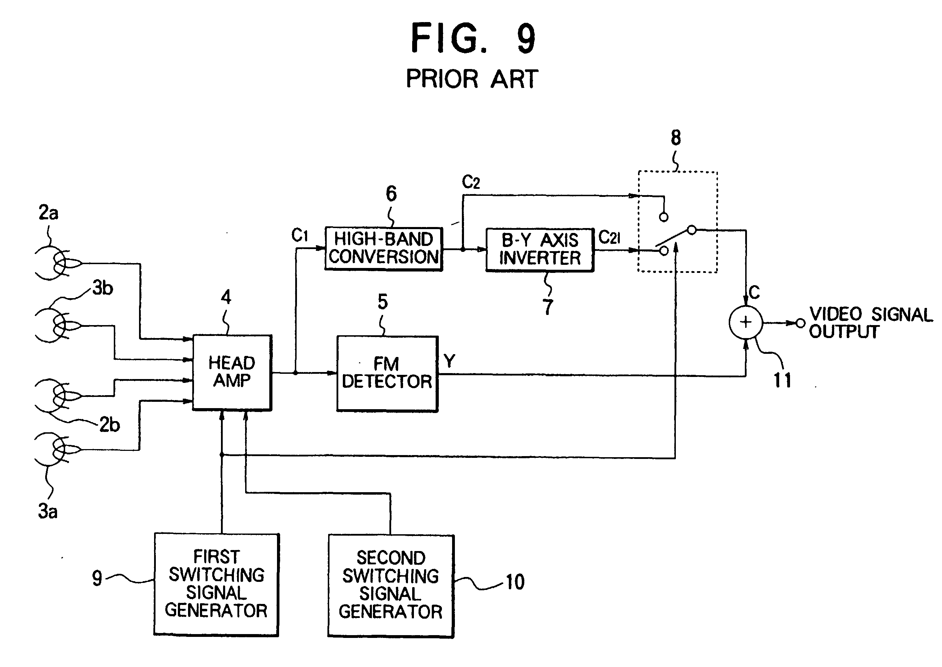

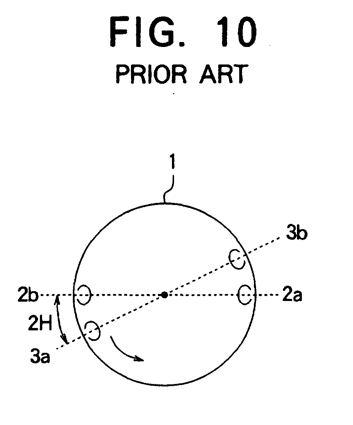

Fig. 9 is a block diagram showing video signal processing circuit in a playback system of a conventional surveillance VTR. Fig. 10 is a diagram showing the positional relationship between four heads on the rotary drum.

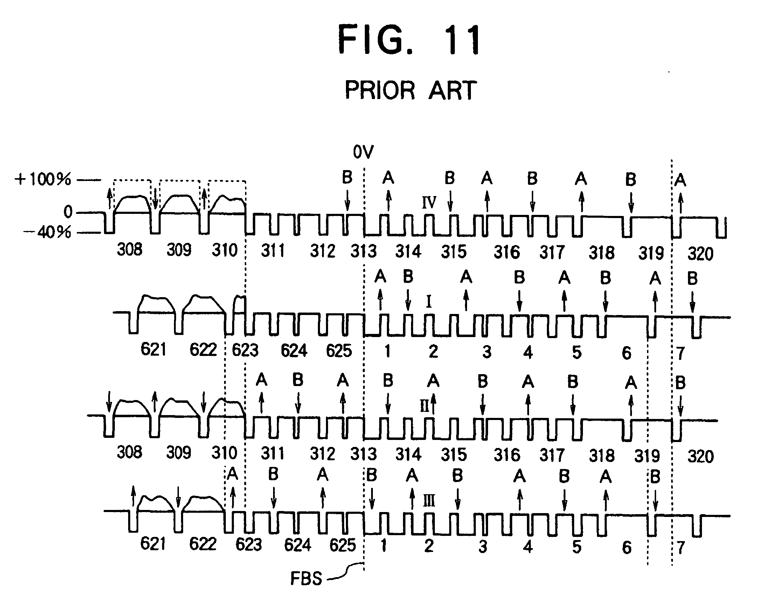

Referring co Fig. 11, reference mark "FBS" denotes a point where the field blanking period starts, "A" denotes that the burst phase is -135°, and "B" denotes that the burst phase is -135°. A first pair of heads 2a and 2b having different azimuth angles are disposed on a rotary drum 1, 180° apart from each other. A second pair of heads 3a and 3b having different azimuth angles from each other and having identical azimuth angles as the heads 2a and 2b. respectively, are disposed on the rotary drum 1, such that the tracks recorded by the second pair of heads 3a and 3b are shifted forward relative to the tracks recorded by the first pair of heads 2a and 2b, by a distance (gap space) corresponding to a multiple of 1H period (2H periods in the example illustrated). Typically, the video signal of each field is recorded per track.

Now let us consider a situation in which the data recorded on a tape one out of every three fields (called field-extraction-recording every three fields) in a 24 hour recording mode, is reproduced over 8 hours (LP mode). The FM signals recorded on the tape field by field are reproduced by the first pair of heads 2a and 2b, and the second pair of heads 3a and 3b, and output via a head amplifier 4 to an FM detector and a high-band converting circuit 6. A B-Y axis inverter 7 and a selector 8 are connected to the high-band converting circuit 6.

The head amplifier 4 switches between a first field signal and a second field signal, according to a first head switching signal of a duty ratio 50 % generated by a first switching signal generator 9. The first pair of heads 2a and 2b, and the second pair of heads 3a and 3b are switched according to a second switching signal generated by a second switching signal generator 10. The FM signal is amplified by the head amplifier 4, and detected by the FM detector 5. and output as the luminance signal Y. A low-band chroma signal C1 having been superimposed on the FM signal is converted to a baseband chroma signal C2 by the high-band converting circuit 6. The baseband chroma signal C2 is input to the B-Y axis inverter 7, and the switch 8 alternately outputs the inverted chroma signal C2I or the baseband chroma signal C2.

The switching operation of the switch 8 is controlled by the first head switching signal generated by the first switching signal generator 9, and when the head 3a is selected, the baseband chroma signal C2 is output, and when the head 3b is selected the inverted chroma signal C2I is output as the chroma signal. The chroma signal having a continuous phase formed of the baseband chroma signal C2 and the inverted chroma signal C2I are mixed with the luminance signal Y at the adder 11, and is output as the video signal. The video signal having been extraction-recorded and produced in the LP mode reproduction, is thereby colored.

When recording is conducted using a 240-minute tape, in an 8-hour recording mode, as in an LP mode (dual-time mode) of the VHS system, to perform surveillance for a period of three times the 8 hours, i.e., for 24 hours, the tape is transported at a speed one third the speed of the LP mode, and field-extraction-recording every three fields is performed. Here, the "8-hour recording mode" means a mode in which the tape speed and the recording track width are halved compared with those in the standard tape transport speed mode (SP mode) to double the recording time to 8 hours.

When the video signal of the PAL system is field-extraction recorded in the LP mode at a one-third speed, one field out of every three fields, the burst phase of the chroma signal is not continuous, so that the reproduced image will not be colored. In the past, when the field-extraction is effected every odd number of fields, the number of fields out of which one field is extracted is made at least five, or generally (4 x N + 1), with N being a natural number, to preserve a four-field sequence. In the case of an even number of fields, recording is conducted with through extraction in frame units (in 2-field units). This is because the television signal according to the CCIR (International Radio Consultative Committee) standards uses a sequence of four fields, in which the burst phase of the chroma signal is alternated every 1H period between + 135° and - 135° about the B-Y axis.

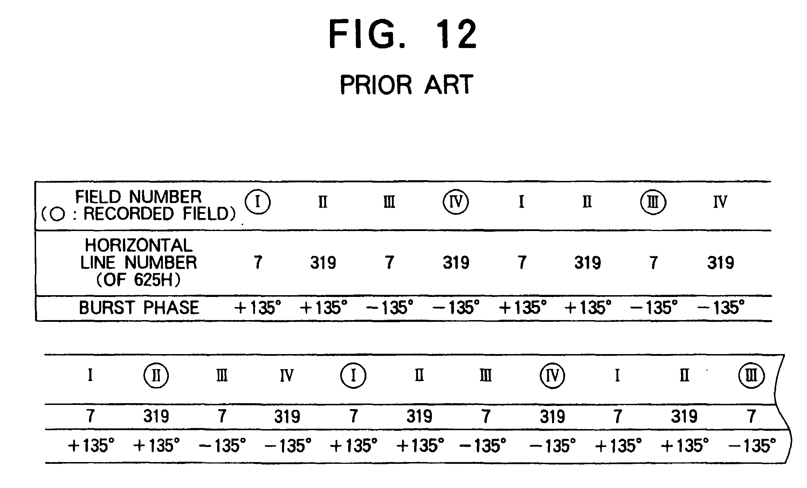

The same point (timing) in the field I to the field IV of the television signal, i.e., the position at which the recording video heads are switched is shown in Fig. 12. The switching occurs at the 7th line of the field I, the 319th line in the next, field II, and then the 7th line in the next, field III, and then the 319th line in the field IV. The burst phase is +, +, -, -. and so on. If the field-extraction is not effected, the burst phase of each field is continuous to that of the preceding field, and the reproduced image will be colored. In the case of the field-extraction every three fields, if the fields whose number is encircled are recorded, the switching occur at the 7th line in the field I, the 319th line in the field IV, the 7th line in the field III, the 319th line in the field II, and so on. Thus, the burst phase at the same point is +, -, +, -, and so on. This sequence is different from the sequence of the original burst phase, and is discontinuous, resulting in loss of color.

In an 8-hour mode (LP mode) playback, when the second pair of heads 3a and 3b are used alternately every field for reproduction, the phase of the chroma signal may be inverted during reproduction of the field IV and the field II, so that the burst phase at the same points will be +, +, -, -, and so on, and continuity is preserved. Then, the resultant image will be colored.

Instead of inverting the phase of the field IV and the field II, the phase of the field I and field III may be inverted. That is, if the chroma phase of every other field is inverted, the burst phase of the chroma signal at the same point will be +, +, -, -, and so on, and the resultant image will be colored.

When the video signal is field-extraction recorded every three field, the image obtained by reproducing the video signal will not be colored unless the phase of the chroma signal of the reproduced video signal is inverted every other field. This means a special reproducing device is required for producing a color image at 8 hour reproduction. When an ordinary video tape recorder which does not have the function of inverting the phase every other field is used for reproduction in the 8 hour playback mode, the resultant image is not colored.

Furthermore, even if the reproducing device has the function of inverting the phase of the chroma signal every other field, it is necessary to provide a means for examining whether the video signal being reproduced has been field extraction recorded and therefore the chroma phase of the video signal is continuous, and it is necessary to invert the phase of the chroma signal of the reproduced video signal every other field. This will increase the cost of the device.

### SUMMARY OF THE INVENTION

The present invention has been made in view of the problems described above.

It is desirable to provide a magnetic recording device which can field-extraction record the video signal of the PAL system, one out of every three fields, in such a manner that when the recorded video signal is reproduced in a mode in which every track is traced by a head just once, the image produced by the reproduced video signal is colored, without inverting the phase of the chroma signal every other field during the reproduction.

According to the invention, there is provided a magnetic recording device as set out in claim 1.

With the above configuration, the color recording compatibility is achieved even when field-extraction recording is conducted at every (3 + 4 x N (N: 0, 1, 2, 3, ...)) fields. Accordingly, even with other playback device, images can be colored.

The device may further comprise:
a converting circuit (29) for converting the chroma signal into a low-band signal; and
a reference oscillator (22, 23) for locking the low-band signal with the phase of the input chroma signal;
wherein the output of the reference oscillator is supplied to the phase inverting means (19).

With the above configuration, the output of a reference oscillator forming a PLL for locking the phase with the input chroma signal is input to a phase inverting means, and the phase of the chroma signal is inverted by the phase inverting means every recording field, and is then low-band converted. As a result, recording compatibility can be achieved in the video signal of the PAL system.

The device may further comprise:
a reproducing means (2a, 2b, 3a, 3b) for reproducing the video signal recorded on the recording medium;
wherein said control means (9) controls the phase inverting means (13) so that the chroma signal is inverted every other field while the video signal is reproduced.

With the above configuration, images can be colored even in a special playback.

### BRIEF DESCRIPTION OF THE DRAWINGS

Fig. 1 is a block diagram showing the configuration of the video signal processing circuit of a VTR according to an embodiment of the invention;
Fig. 2 is a time chart showing the through/inversion control signal TH/IV;
Fig. 3 is a block diagram showing the chroma conversion/inversion circuit;
Fig. 4 is a flow chart showing an example of the mode control;
Fig. 5 is a diagram showing the configuration of the recording APC circuit in Fig. 1;
Fig. 6 is a diagram showing the configuration of the BY axis inversion circuit in Fig. 1;
Fig. 7 is a diagram showing the configuration of the killer detection circuit in Fig. 1:
Fig. 8 is a diagram of the phase detection in the recording APC circuit;
Fig. 9 is a block diagram showing the configuration of the video signal processing circuit of a playback system in a conventional VTR;
Fig. 10 is a diagram showing the arrangement of the heads on the rotary drum:
Fig. 11 is a waveform diagram of a television signal of the PAL system according CCIR; and
Fig. 12 is a diagram showing the field-extraction recording every three fields of the television signal of the PAL system.

### DETAILED DESCRIPTION OF THE PREFERRED EMBODIMENTS

Embodiments of the invention will now be described with reference to the attached drawings.

### Embodiment 1

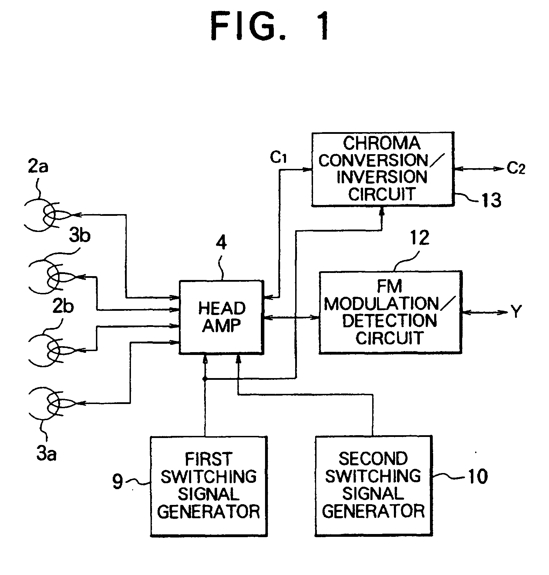

Fig. 1 is a block diagram showing the configuration of the video signal processing circuit of a VTR according to the present embodiment. The components identical to those in Fig. 9 are denoted by identical reference numerals.

During recording, the chroma conversion/inversion circuit 13 converts the base band chroma signal C2 into a low-band chroma C1. During field-extraction recording, the chroma conversion/inversion circuit 13 performs B-Y axis inversion for making continuous the burst phase of the video signal to be recorded, in accordance with the head switching signal from the first switching signal generator 9. During playback, the chroma conversion/inversion circuit 13 converts the low-band chroma signal C1 into a baseband chroma signal C2. During playback in which the same track is traced more than once, or in which only a fraction of each track is traced, and one field of video signal is obtained by assembling the signals obtained by tracing two or more tracks, the chroma conversion/inversion circuit 13 performs B-Y axis inversion for making the burst phase of the reproduced video signal continuous.

For instance, let us assume a video signal having been field-extraction recorded one out of every three fields. If this signal is reproduced, by tracing each field just once, the time taken for the playback will be one third. That is the speed of the motion of the image is three times. In this case, no inversion of the phase is needed, as will be explained later. In the identical-speed playback, in which the video signal having been recorded in the above-mentioned manner is reproduced, by tracing the same track three times to make the playback time identical to the time taken for recording. In this case, the phase of the chroma signal needs to be inverted every other field to make the chroma phase continuous. In a fast playback or speed search, in which the tracks are traced obliquely so that each head traces part only of each track, and video signal of each field is formed by assembling the video signals from fractions of different racks, the chroma phase must be reversed at each transition from one track to another.

During recording, the FM modulation/detection circuit 12 modulates the luminance signal Y to produce FM signals. During playback, the FM modulation/detection circuit 12 performs FM detection to produce a luminance signal.

The head amplifiers 4 are used to amplify the signals to be recorded, during recording, and to amplify the reproduced signal during playback.

The first switching signal generator 9 generates a first switching signal.

The second switching signal generator 10 generates a second switching signal.

The first pair of heads 2a and 2b, and a second pair of heads 3a and 3b are used to record the video signal, and to reproduce the FM signals recorded on the magnetic tape field by field.

The input to the head amplifier 4 is switched between a first signal in field units, and a second signal in field units, according to the first switching signal of a 50 % duty ratio, generated by the first switching signal generator 9. The selection between the first pair of heads 2a and 2b and the second pair of heads 3a and 3b is made according to the second switching signal generator 10.

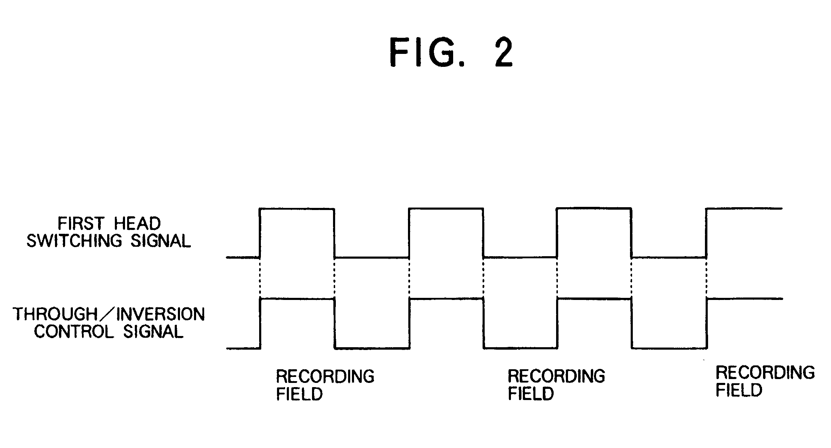

When the video signal of the PAL system is field-extraction-recorded every three fields in a 24 hour recording mode, the luminance signal Y is FM modulated by the FM modulation/detection circuit 12 to become an FM signal. The chroma conversion/inversion circuit 13 processes the chroma signal C2 so that its phase is alternately inverted or not inverted (passed without the inversion) about the B-Y axis, in synchronism with the first head switching signal (later described in detail with reference to Fig. 2), and converts the signal into a lower band, to produce a low-band chroma signal C1. The FM signal and the low-band chroma signal C1 are superimposed at the head amplifier 4, and supplied to the second heads 3a and 3b when the second head switching signal is High, and alternately supplied to the second heads 3a or 3b according to the first head switching signal, so that the television signal is field-extraction-recorded on the magnetic tape in the order of field I, field IV, field III, field II, field I, field IV, field III, field II ... .

During playback of a magnetic tape having been recorded in the ordinary 8-hour recording mode (LP mode), the signals reproduced in field units by the second heads 3a and 3b are amplified by the head amplifier 4, and are alternately output in accordance with the first head switching signal.

The low-band chroma signal C1 is converted to a higher band, without the B-Y axis inversion, at the chroma conversion/inversion circuit 13, and reproduced as a baseband chroma signal C2. The FM signal is FM-detected at the FM modulation/detection circuit 12, and reproduced as a luminance signal Y.

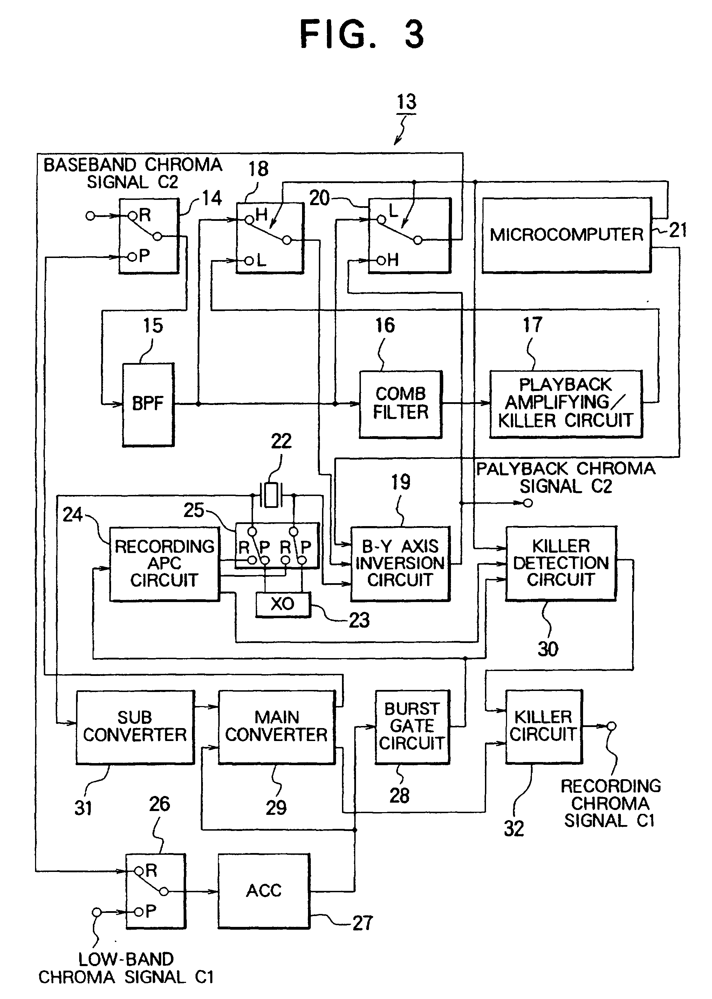

An example of the internal configuration of the chroma conversion/inversion circuit 13 in Fig. 1, which forms the pertinent part of the invention, will next be described with reference to Fig. 3.

Referring to Fig. 3, an RP selector 14 switches between the baseband chroma signal C2 supplied from a surveillance device or the like, and a baseband chroma signal at the time of playback according to the mode set for recording (R) or playback (P). A bandpass filter (BPF) 15 passes the 4.43 MHz components of the output signal of the RP selector 14. A comb filter 16 extracts the chroma signal from the signal output from the BPF 15 during playback. A playback amplifying/killer circuit 17 amplifies the reproduced chroma signal and also serves as a chroma killer.

An HL selector 18 switches between the output signal of the BPF 15 and the output signal of the playback amplifying/killer circuit 17 according to a control signal 24H-REC-H. A B-Y axis inversion circuit 19 is capable of inverting the phase of the baseband chroma signal of the PAL system about the B-Y axis, according to the through/inversion control signal TH/IV. During playback, the B-Y axis inversion circuit 19 outputs a baseband chroma signal C2 having a continuous phase. An HL selector 20 switches between the output of the B-Y axis inversion circuit 19, and the output of the BPF 15 according to the control signal 24H-REC-H. A microcomputer 21 generates the control signals 24H-REC-H, TH/IV and the like, depending on the mode of the magnetic recording and playback device.

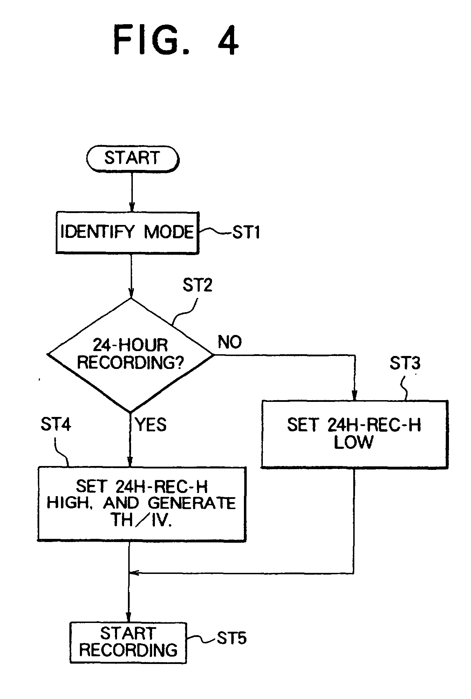

Fig. 4 is a flowchart showing an example of control exerted by the microcomputer 21. The microcomputer 21 makes judgment depending on the mode setting for the VTR (ST1), and checks if the mode is a 24-hour recording mode (ST2). If the answer is "No", the control signal 24H-REC-H is set Low (ST3). If the answer is "Yes", the control signal 24H-REC-H is set High and the TH/IV is generated (ST4). Recording is then started (ST5).

Referring again to Fig. 3, a Quartz oscillating element (Quartz crystal) 22 is for oscillation at 4.43 MHz. A crystal oscillator (XO) 23 performs free-running oscillation to serve as a reference for the high-band conversion of the low-band chroma signal C1 during playback. A recording APC (automatic phase control) circuit 24 is for phase-locking a voltage-controlled oscillator 33, to be described later, with the burst signal. An RP selector 25 is for selective connection with the crystal oscillator 23 during playback, or with the voltage-controlled oscillator 33, to be described later, within the APC circuit 24.

An RP selector 26 is for selectively inputting the baseband chroma signal C2 output from the HL selector'20 during recording, or the low-band chroma signal C1 during playback. An automatic chroma gain controller (ACC) 27 detects the level of the signal output from the RP selector 26 and controls the gain of the chroma signal so as to maintain the level constant. A burst gate circuit (BG) 28 extracts the burst signal from the output of the ACC 27. A main converter 29 performs low-band conversion of the chroma signal output from the ACC 27 by means of the reference frequency signal of 5.06 MHz during recording, and performs the high-band conversion of the low-band conversion chroma signal to a baseband chroma signal C2 by means of the low-band chroma signal and the reference frequency signal of 5.06 MHz during playback. A killer detection circuit 30 detects whether the burst signal of the BG 28 is PLL-locked in the recording APC circuit 24. A sub-converter 31 produces the reference frequency signal of 5.06 MHz from the color subcarrier frequency signal Fsc generated by the Quartz oscillator 22, and inputs the reference signal to the main converter 29. A killer circuit 32 outputs the low-band chroma signal C1 during recording, and applies the chroma killer in accordance with the killer output from the killer detection circuit 30.

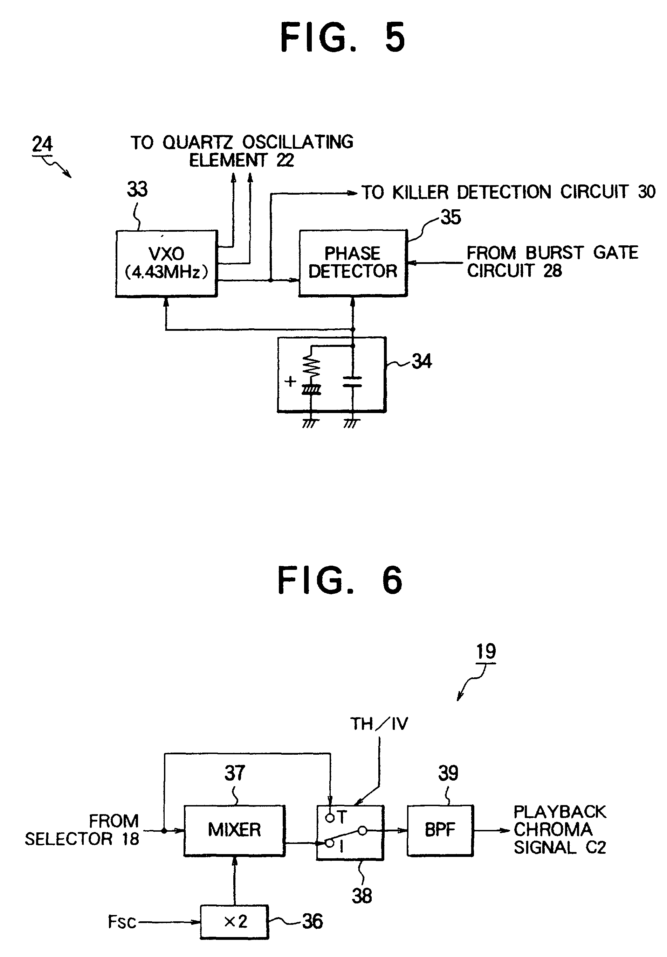

An example of configuration of the recording APC circuit 24 will next be described with reference to Fig. 5.

A voltage-controlled oscillator circuit (VXO) 33 performs voltage-controlled oscillation for locking the phase of the input chroma signal C2 during recording. A phase detector 35 compares the phase of the output signal from the VXO 33 and the burst signal output from the burst gate circuit 28, and smoothes the error output at a recording APC filter 34, and controls the frequency of the VXO 33 such that the phase difference is -90°.

Fig. 6 is a block diagram showing the internal configuration of the B-Y axis inversion circuit 19.

The output of the crystal 22 is the color subcarrier frequency signal Fsc of 4.43 MHz. An x2 multiplier 36 multiplies the phase, cos ωt, of the color subcarrier frequency signal Fsc by two to produce cos 2ωt. An adder (mixer) 37 multiplies, by means of a multiplier formed of a dual-stage differential amplifier, the cos (ωt ±θ ) where the B-Y axis is ωt and the burst phase is ±θ, by the output cos 2ωt of the x2 multiplier 36. A through/inversion selector 38 selects the through signal or the B-Y axis-inverted signal according to the through/inversion control signal TH/IV from the microcomputer 21. A bandpass filter 39 removes the components other than cos (ωt - (±θ )) having been B-Y axis inverted, from the output signal of the adder 37.

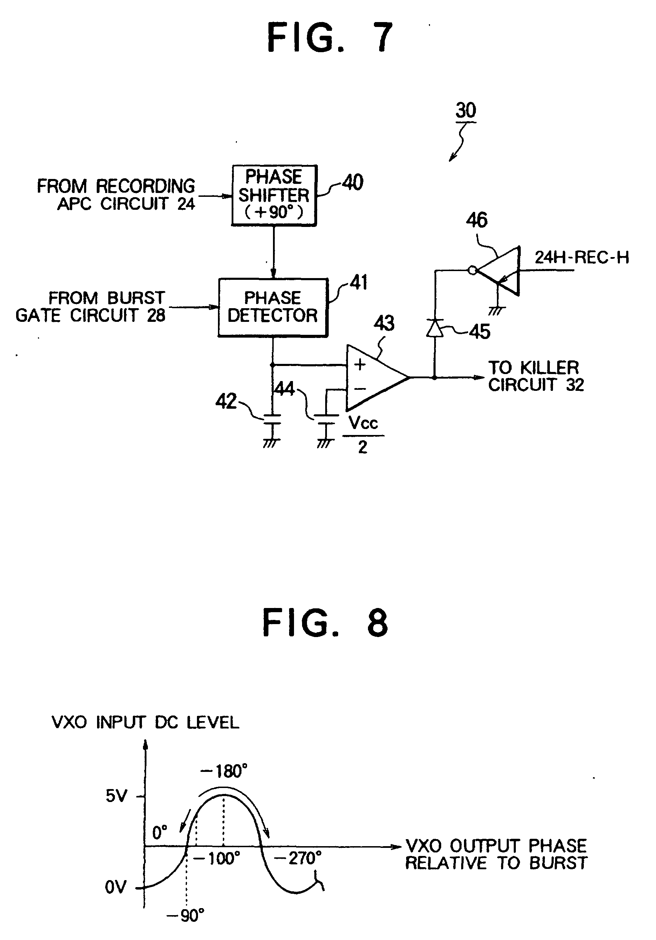

An example of configuration of the killer detection circuit 30 will next be described with reference to Fig. 7.

A phase shifter 40 shifts the phase of the output signal from the VXO 33 by +90°. A phase detector 41 performs synchronous detection of the output signal from the phase shifter 40 and the burst signal output from the burst gate circuit 28, and the DC potential at the output is lowered when the two inputs are of the same phase. A killer filter 42 smoothes the DC output of the phase detector 41. A comparator 43 compares the smoothed DC potential with the 1/2 Vcc potential, and outputs a DC potential of a High level for killer operation when the smoothed DC potential is greater than the 1/2 Vcc potential. Reference numeral 44 denotes a 1/2 Vcc power supply. A diode 45 forcibly lowers the output of the comparator 43 to Low, in a 24-hour recording mode control signal 24H-REC-H from the microcomputer 21. This is achieved because the control signal 24H-REC-H from the microcomputer 21 is inverted by a digital transistor 46. Because of the potential, the killer operation of the killer circuit 32 is released.

The recording operation of the video signal processing circuit in the magnetic recording and playback device of the above configuration will next be described.

When the 8-hour recording mode is selected, the baseband chroma signal C2 input to the RP selector 14 is passed through the BPF 15 and supplied to the HL selectors 18 and 20. Since the control signal 24H-REC-H is Low, the signal is guided by the HL selector 20 to the RP selector 26, and is subjected to chroma gain control at the ACC 27. The signal is then low-band converted at the main converter 29, and passed through the killer circuit 32, and output as the low-band recording chroma signal C1 to the head amplifier 4.

The chroma signal output from the ACC 27 to the burst gate circuit 28 is burst-gated, and is subjected to phase-control at the recording APC 24. The oscillation output of the VXO 33 within the APC 24 is input to the sub-converter 31, and the low-band converted recording chroma signal C1 is phase-locked with the baseband signal C2. The output signal of the VXO 33 is in an equilibrium when the burst signal output from the burst gate circuit 28 is lagging by 90°.

This will be explained with reference to the characteristic diagram of the input DC level versus the output phase of the VXO 33. If the output phase of the VXO 33 is lagging a little relative to -90° (a phase lagging by 90° ) with respect to the burst phase, the terminal voltage of the APC filter 34 rises, and the DC voltage input to the VXO 33 rises. As a result, the oscillating frequency of the VXO 33 rises, and the output phase of the VXO 33 is advanced. Conversely, if the output phase of the VXO 33 is leading a little relative to -90° with respect to the burst phase, the terminal voltage of the APC filter 34 is lowered, and the DC voltage input to the VXO 33 is lowered. As a result, the oscillating frequency of the VXO 33 is lowered, and the output phase of the VXO 33 is retarded. In this way, the phase difference is maintained at the equilibrium point -90°. Whether the output burst signal of the burst gate circuit 28 is phase-locked is checked by the killer detection circuit 30, and if it is locked, the operation of the killer circuit 32 is interrupted. If the output signal of the VXO 33 which is locked at -90° with respect to the burst phase is phase-shifted by +90° by the phase-shifter 40, and if this phase-shifted signal is in phase with the burst phase, the output DC of the phase detector 41 is lowered.

When the 24-hour recording mode is selected, field-extraction-recording every three fields is conducted.

The chroma signal output from the BPF 15 in the same way as above is guided by the HL selector 18 to the B-Y axis inversion circuit 19, because the control signal 24H-REC-H is High. If the recording were conducted in the same way as in the 8-hour mode, the burst phase of the recorded fields would not be continuous. Therefore, if the through/inversion control signal TH/IN output from the microcomputer 21 is made High and Low alternately at every field, as shown in Fig. 2, the input chroma signal is alternately passed through or B-Y axis inverted. That is, it is B-Y axis inverted (the output being different from the input phase) every other field, or in alternating fields, and it is passed through (without phase inversion) during intervening fields. In this way the output phase is reversed at every field. In this specification, the term "reversal" is used to mean that the phase of each field is different from the phase of the immediately preceding field, whereas the term "inversion" is used mean that the phase of the output is different from the phase of the input.

The B-Y axis inverted chroma signal is inverted relative to the output Fsc of the quartz oscillator 22 phased-locked with the input chroma signal before the inversion. Because the control signal 24H-REC-H is High, the output signal of the B-Y axis inversion circuit 19 is guided by the HL selector 20 to the RP selector 26, and is subjected to automatic chroma control at the ACC 27. The signal is then low-band converted at the main converter 29, and output via the killer circuit 32 as the recording chroma signal C1. The burst signal supplied from the ACC 27 to the burst gate circuit 28 is input to the recording APC circuit 24. In this way, feedback control loop is applied. This feedback loop is in addition to the feedback loop in the recording APC circuit 24, so that dual feedback loop is formed.

The burst signal supplied from the ACC 27 to the burst gate circuit 28 is then input to the phase detector 41 in the killer detection circuit 30. If the output phase of the VXO 33 is a little lagging relative to -90° with respect to the burst phase of the chroma signal inverted about the B-Y axis, the terminal voltage of the recording APC filter 34 in the recording APC circuit 24 rises, and the oscillation frequency of the VXO 33 rises. As a result, the output phase of the VXO 33 is advanced, and accordingly the phase of Fsc input to the B-Y axis inversion circuit 19 is advanced, and the phase of the B-Y axis inverted chroma signal is also advanced, and the phase of the burst signal having passed the HL selector 20, the RP selector 26, the ACC 27 and the burst gate circuit 28 is also advanced. For this reason, the output phase of the VXO 33 cannot advance, and the input DC level of the VXO 33 is left increased, and the output phase of the VXO 33 is retarded relatively. As will be seen from the characteristics of the phase detector shown in Fig. 8, if the retardation becomes greater than-180°, the input DC level of the VCO 33 is lowered, and the output phase relative to the burst phase is retarded toward -270° (or +90°). Accordingly, an equilibrium is reached at -270° (or +90°) which is different from the equilibrium point for the 8-hour mode, and the dual loop is locked, and the phase of the recorded low-band chroma signal is locked to the phase of the input chroma signal C2 supplied from the RP selector 14, and the image is colored during playback in the 8-hour mode. However, the output phase of the VXO 33 which is at -270° (or +90°) is shifted by -90 by the phase shifter 40, resulting in -180° (or +180°) which is an inversion, the phase detector 41 does not find that it is in phase, and the killer circuit 32 operates. But because the killer output is made Low by the diode 45, as described above, the killer operation of the killer circuit 32 is released. In the above configuration, the killer operation is forcibly released by the killer detection circuit 30. If the arrangement is such as to recognize a locked condition only when the phase detector 41 finds an in-phase or opposite-phase relationship, it may not be necessary to forcibly release the killer operation.

The operation of the magnetic recording and playback device in an 8-hour playback mode is next described.

In the magnetic recording and playback shown in Fig. 3 to Fig. 7, the low-band chroma signal C1 is guided by the RP selector 26 to the ACC 27, and supplied to the main converter 29, where it is high-band converted. The signal is further passed through the RP selector 14, to the BPF 15, and is supplied to the comb filter 16, where the components other than the chroma signal is removed. The chroma signal is amplified at the playback amplifying/killer circuit 17, and is passed through the RP selector 18 to the B-Y axis inversion circuit 19, which passes the input signal without inversion, because the through/inversion control signal TH/IV from the microcomputer 21 is selecting "Through". The output of the B-Y axis inversion circuit 19 is the baseband chroma signal C2 during playback.

The output of the free-running oscillation at 4.43 MHz at the oscillator 23 is passed through the sub-converter 31, and the main converter 29 performs high-band conversion by means of an oscillation output of 5.06 MHz. In the above configuration, it is possible to share the circuit 19 for the B-Y axis phase inversion, so that the cost can be lowered and the function of coloring the images is improved.

In Embodiment 1, the intermittent recording is conducted at a tape transport speed which is one third of the LP mode. The invention can be applied to a situation in which the intermittent recording is conducted at a tape speed one third of the SP mode.

In Embodiment 1, the field-extraction recording is conducted every three fields. The field-extraction recording can be conducted in field units, every (3 + 4 x N where N = 0, 1, 2, 3, ...) fields, such as every 3, 7, 11, 15, ... fields.

### Embodiment 2

Description will now be made of the operation of the magnetic recording and playback device shown in Fig. 3 to Fig. 7 during a special playback, such as still playback in an 8-hour playback, the identical speed playback (24-hour playback), or the like.

The difference from the 8-hour playback in Embodiment 1 is that the through/inversion control signal TH/IV from the microcomputer 21 controls "through" or "inversion" so as to preserve continuity of the phase of the color signal. That is, for instance, if the same track is reproduced repeatedly during still playback, a discontinuity occurs at the connecting points between successive fields. By alternating "through" and "inversion" at every reproduced field, the continuity is preserved and the image is colored. Fsc input to the B-Y axis inversion circuit 19 is the signal locked to the oscillator 23 in the free-running oscillation. Operation other than still playback, such as frame advancement, can be controlled in the same way.

In the case of the identical speed playback (24-hour playback), the same track is traced three time, and the video data of the same field is repeated reproduced three times to form the video data of three successive fields. In such a case, the chroma phase of the reproduced video signal is not continuous between successive fields. By inverting the chroma phase of the video signal every other field, the chroma phase of the successive fields is made continuous and the image is colored.

In the case of a fast playback or speed search in the head traces the helical tracks obliquely, so that only a fraction of each track is traced, and one field of video signal is obtained by assembling the signals obtained by tracing two or more tracks, the chroma phase is reversed each time there is a transition from one track to another, i.e., the head amplifier 4 switches from one head to another.

## Claims

1. A magnetic recording device for magnetically recording video signal of the PAL system, through field extraction, comprising:
a recording means (2a, 2b, 3a, 3b) for recording one out of every 3 + 4 x N fields, where N is a non-negative integer;
a phase inverting means (19) for inverting the phase of the chroma signal extracted from the video signal, about the B-Y axis; and
a control means (9,21) for controlling said phase inventing means (19) so as to invert the chroma signal every other recording field, while the chroma signal is recorded.

2. The device according to claim 1, wherein the data of each field is recorded per track, and the chroma signal of the data recorded on every other field is B-Y axis inverted.

3. The device according to claim 1, further comprising:
a converting circuit (29) for converting the chroma signal into a low-band signal; and
a reference oscillator (22, 23) for locking the low-band signal with the phase of the input chroma signal;
wherein the output of the reference oscillator is supplied to the phase inverting means (19).

4. The device according to claim 1, further comprising
a reproducing means (2a, 2b, 3a, 3b) for reproducing the video signal recorded on the recording medium;
wherein said control means (9,21) controls the phase inverting means (19) so that the chroma signal is inverted every other field while the video signal is reproduced.

5. The device according to claim 4, wherein
said control means causes the inversion of the phase of the chroma signal when the video signal is reproduced by repeatedly tracing the same track a plurality of times.

6. The device according to claim 4, wherein
said control means causes the inversion of the phase of the chroma signal when one field of video signal is produced by combining the video signal of two or more tracks traced in succession by different heads.

## Patentansprüche

1. Magnetische Aufzeichnungsvorrichtung zum magnetischen Aufzeichnen eines Videosignals des PAL-Systems durch Halbbildextraktion, welche aufweist:
Aufzeichnungsmittel (2a, 2b, 3a, 3b) zum Aufzeichnen eines von jeweils 3 + 4 x N Halbbildern, wobei N eine nicht-negative ganze Zahl ist;
Phaseninvertierungsmittel (19) zum Invertieren der Phase des aus dem Videosignal herausgezogenen Chromasignals um die B-Y-Achse; und
eine Steuervorrichtung (9, 21) zum Steuern der Phaseninvertierungsmittel (19) in der Weise, daß das Chromasignal jedes zweite Aufzeichnungshalbbild invertiert wird, während das Chromasignal aufgezeichnet wird.

2. Vorrichtung nach Anspruch 1, worin die Daten jedes Halbbildes pro Spur aufgezeichnet werden und das Chromasignal der Daten, das bei jedem zweiten Halbbild aufgezeichnet wird, B-Y-Achseninvertiert ist.

3. Vorrichtung nach Anspruch 1, welche weiterhin aufweist:
eine Umwandlungsschaltung (29) zum Umwandeln des Chromasignals in ein Tiefbandsignal; und
einen Bezugsoszillator (22, 23) zum Verriegeln des Tiefbandsignals mit der Phase des eingegebenen Chromasignals;
wobei das Ausgangssignal des Bezugsoszillators zu den Phaseninvertierungsmitteln (19) geliefert wird.

4. Vorrichtung nach Anspruch 1, welche weiterhin aufweist:
Wiedergabemittel (2a, 2b, 3a, 3b) zur Wiedergabe des auf dem Aufzeichnungsmedium aufgezeichneten Videosignals;
wobei die Steuermittel (9, 21) die Phaseninvertierungsmittel (19) so steuern, daß das Chromasignal jedes zweite Halbbild invertiert wird, während das Videosignal wiedergegeben wird.

5. Vorrichtung nach Anspruch 4, worin
die Steuermittel die Invertierung der Phase des Chromasignals bewirken, wenn das Videosignal wiedergegeben wird durch mehrmalige Wiederholung der Verfolgung derselben Spur.

6. Vorrichtung nach Anspruch 4, worin
die Steuermittel die Invertierung der Phase des Chromasignals bewirken, wenn ein Halbbild des Videosignals wiedergegeben wird durch Kombinieren des Videosignals von zwei oder mehr Spuren, die aufeinander folgend durch verschiedene Köpfe abgetastet werden.

## Revendications

1. Dispositif d'enregistrement magnétique pour enregistrer magnétiquement un signal vidéo du système PAL, par extraction de champ, comprenant :
des moyens d'enregistrement (2a, 2b, 3a, 3b) pour enregistrer un champ sur tous les 3 + 4 x N champs, où N est un nombre entier non négatif;
des moyens d'inversion de phase (19) pour inverser la phase du signal de chroma extrait du signal vidéo autour de l'axe B-Y; et
des moyens de commande (9, 21) pour commander lesdits moyens d'inversion de phase (19) de manière à inverser le signal de chroma à chaque autre champ d'enregistrement, tandis que le signal de chroma est enregistré.

2. Dispositif selon la revendication 1, dans lequel les données de chaque champ sont enregistrées par piste et le signal de chroma des données enregistrées sur chaque autre champ est inversé sur l'axe B-Y.

3. Dispositif selon la revendication 1, comprenant en outre :
un circuit de conversion (29) pour convertir le signal de chroma en signal de bande à basses fréquences; et
un oscillateur de référence (22, 23) pour verrouiller le signal de bande à basses fréquences sur la phase du signal de chroma d'entrée;
dans lequel la sortie de l'oscillateur de référence est délivrée aux moyens d'inversion de phase (19).

4. Dispositif selon la revendication 1, comprenant en outre :
des moyens de reproduction (2a, 2b, 3a, 3b) pour reproduire le signal vidéo enregistré sur le support d'enregistrement;
dans lequel lesdits moyens de commande (9, 21) commandent les moyens d'inversion de phase (19) de sorte que le signal de chroma soit inversé à chaque autre champ tandis que le signal vidéo est reproduit.

5. Dispositif selon la revendication 4, dans lequel:
lesdits moyens de commande provoquent l'inversion de la phase du signal de chroma lorsque le signal vidéo est reproduit en suivant de manière répétée la même piste une pluralité de fois.

6. Dispositif selon la revendication 4, dans lequel :
lesdits moyens de commande provoquent l'inversion de la phase du signal de chroma lorsqu'un champ de signal vidéo est produit en combinant le signal vidéo de deux pistes ou plus suivies successivement par différentes têtes.
